# FASCICULE DE BREVET EUROPEEN

(11) **EP 2 873 989 B1**
(45) Date de publication et mention de la délivrance du brevet: **04.07.2018**
(21) Numéro de dépôt: 14306614.0
(22) Date de dépôt: 13.10.2014
(51) Int. Cl.: G01V 99/00

(54) **Procédé de construction d'une grille représentative de la distribution d'une propriété physique d'une formation souterraine par simulation statistique multipoint conditionnelle**
Verfahren zum Erstellen eines repräsentativen Rasters einer physikalischen Eigentumsstreuung einer unterirdischen Formation durch bedingte statistische Mehrpunktsimulation
Method for building a grid representing the distribution of a physical property of a subsurface formation by conditional multi-point statistical simulation

(30) Priorité: 14.11.2013 FR 1361103
(43) Date de publication de la demande: 20.05.2015
(73) Titulaire: IFP Energies nouvelles, 92852 Rueil-Malmaison Cedex (FR)
(72) Inventeur: Le Ravalec, Mickaele, 92500 Rueil-Malmaison (FR)

(56) Documents cités:
- US-A1- 2013 262 051
- Ã LVARO PARRA ET AL: "Adapting a texture synthesis algorithm for conditional multiple point geostatistical simulation", STOCHASTIC ENVIRONMENTAL RESEARCH AND RISK ASSESSMENT, SPRINGER, BERLIN, DE, vol. 25, no. 8, 1 mai 2011 (2011-05-01), pages 1101-1111, XP019982279, ISSN: 1436-3259, DOI: 10.1007/S00477-011-0489-1
- YONG G ET AL: "Solution of Multiple-Point Statistics to Extracting Information from Remotely Sensed Imagery", JOURNAL OF CHINA UNIVERSITY OF GEOSCIENCES,, vol. 19, no. 4, 1 août 2008 (2008-08-01), pages 421-428, XP025686142, ISSN: 1002-0705, DOI: 10.1016/S1002-0705(08)60076-X [extrait le 2008-08-01]
- BURC ARPAT G ET AL: "Conditional Simulation with Patterns", MATHEMATICAL GEOLOGY, KLUWER ACADEMIC PUBLISHERS-PLENUM PUBLISHERS, NE, vol. 39, no. 2, 12 avril 2007 (2007-04-12) , pages 177-203, XP019506006, ISSN: 1573-8868, DOI: 10.1007/S11004-006-9075-3
- YUHONG LIU ET AL: "Improving Sequential Simulation With a Structured Path Guided by Information Content", MATHEMATICAL GEOLOGY, vol. 36, no. 8, 1 novembre 2004 (2004-11-01), pages 945-964, XP055121677, DOI: 10.1023/B:MATG.0000048800.72104.de

## Description

La présente invention concerne le domaine de l'industrie pétrolière, plus particulièrement le domaine de l'exploration et de l'exploitation des réservoirs pétroliers ou de sites de stockage géologique de gaz.

L'étude d'un champ pétrolier, nécessite la construction de modèles, dits modèles géologiques au sens large. Ces modèles, bien connus et largement utilisés dans l'industrie pétrolière, permettent de déterminer de nombreux paramètres techniques relatifs à la recherche, l'étude ou l'exploitation d'un réservoir, d'hydrocarbures par exemple. En effet, un modèle géologique se doit d'être représentatif de la structure d'un réservoir ainsi que de son comportement. On peut ainsi par exemple déterminer les zones qui ont le plus de chance de contenir des hydrocarbures, les zones dans lesquelles il peut être opportun de forer un puits d'injection pour améliorer la récupération des hydrocarbures, le type d'outils à utiliser, les propriétés des fluides utilisés et récupérés, etc.

Ce type de maquette du sous-sol est le plus souvent représenté sur un ordinateur (on parle alors de modèle numérique), par un maillage ou grille, généralement tridimensionnel, chaque maille étant caractérisée par une ou plusieurs propriétés pétrophysiques (faciès, porosité, perméabilité, saturation, etc). Du fait de la limitation de l'information extérieure disponible (nombre de puits, de carottes restreint, etc), le remplissage des mailles nécessite de recourir à des procédés de construction dits probabilistes. L'interprétation de ces grilles en termes de paramètres techniques d'exploitation nécessite que les mailles soient remplies le plus fidèlement possible à la réalité. Le remplissage des mailles doit donc notamment tenir compte des informations extérieures disponibles, mais aussi rendre compte de la continuité et de la connectivité des structures géologiques étudiées.

### État de la technique

Les documents suivants seront cités au cours de la description :
Efros, A.A., Leung, T.K., 1999, Texture synthesis by non-parametric sampling, The Proceedings of the Seventh IEEE International Conference on Computer Vision, 2, 1033 - 1038, http://dx.doi.org/10.1109/ICCV.1999.790383.
Guardiano, F., Srivastava, M., 1993, Multivariate geostatistics: beyond bivariate moments, In: Soares, A. (Ed.), Geostatistics-Troia. Kluwer Academic Publications, Dordrecht, 133-144, http://dx.doi.org/10.1007/978-94-011-1739-5_12.
Müller, C., Siegesmund, S., Blum, P., 2010, Evaluation of the representative elementary volume (REV) of a fractured geothermal sandstone reservoir, Environ. Earth Sci., 61, 1713-1724, http://dx.doi.org/10.1007/s.12665-010-0485-7.
Strebelle, S., 2002, Conditional simulation of complex geological structures using multiple-point statistics, Mathematical Geology, 34 (1), 1-21.
Wei, L.Y., Levoy, M., 2000, Fast texture synthesis using tree-structured vector quantization, SIGGRAPH'00, proceedings of 27th Ann. Conf. Comp. Graphics Inter. Techn., 479-488, http://dx.doi.org/10.1145/344779.345009.

Le concept de simulation statistique multipoint a été introduit par Guardiano et Srivastava (1993). L'intérêt des méthodes de simulation statistique multipoint, par rapport aux méthodes de simulation statistique à deux points, est de permettre la génération de modèles géologiques comprenant des objets géologiques de forme complexe, notamment curvilinéaire. Le principe de ces méthodes consiste à apporter une information quant à la forme des objets, leur distribution spatiale, la façon dont ils sont connectés par le biais d'une image d'apprentissage. Cette image peut être une image satellite, une réalisation d'une autre méthode de simulation (par exemple une méthode objet ou un processus génétique), une carte sismique de haute résolution, *etc.* On définit ensuite une fenêtre qui parcourt l'image d'apprentissage pour capturer l'occurrence des configurations de valeurs présentes. L'image d'apprentissage se substitue ainsi au variogramme auquel se réfèrent les méthodes de simulation à deux points. Connaissant l'image d'apprentissage, on cherche ensuite à simuler une nouvelle image reproduisant les formes détectées sur l'image d'apprentissage. Le mode de simulation en statistique multipoint est séquentiel, les mailles de l'image à simuler sont visitées l'une après l'autre suivant un ordre aléatoire. D'un point de vue pratique, il a fallu attendre l'enseignement de Strebelle (2002) pour qu'un premier algorithme suffisamment efficace pour être utilisable soit implémenté.

En parallèle, des techniques analogues, dites de synthèse de texture, ont été développées dans le domaine de l'infographie. Là encore, le principe de ces méthodes consiste à se référer à une image d'apprentissage comprenant des motifs que l'on cherche à reproduire sur l'image simulée. L'information apportée par cette image d'apprentissage est extraite à l'aide d'une fenêtre que l'on fait glisser le long de l'image. Ce domaine de la synthèse d'image est très riche et de nombreux travaux ont été reportés dans la littérature (par exemple (Efros et Leung, 1999) ou encore (Wei et Levoy, 2000)). L'ordre de visite des mailles dans le cas de la synthèse de texture n'est pas aléatoire. Par exemple dans le cas de Efros et Leung (1999), le processus de simulation commence par la maille au milieu de l'image à simuler. Par la suite, on cherche ses plus proches voisins, puis les plus proches voisins des plus proches voisins, *etc.* On obtient alors une séquence de couronnes concentriques, de plus en plus grandes. Dans le cas de Wei et Levoy (2000), les auteurs préconisent la visite des mailles de l'image suivant un ordre établi : de gauche à droite et de bas en haut.

Pour être le plus possible représentatif de la réalité et permettre une exploitation optimale d'un réservoir, la construction de modèles géologiques doit pouvoir tenir compte de toute donnée extérieure disponible, comme par exemple des mesures sur des carottes extraites des puits ou des diagraphies le long des puits.

Les méthodes de synthèse de texture ne permettent pas de prendre en compte de données extérieures. L'absence de données extérieures fait que les mailles peuvent être visitées dans un ordre prédéterminé. En visitant les mailles proches de celles qui contiennent déjà des valeurs, on préserve mieux l'extension latérale des objets. Par ailleurs, on peut considérer des fenêtres plus petites, ce qui implique un gain en temps de calcul.

Les méthodes de simulation statistique multipoint permettent cette prise en compte de données extérieures et sont dites alors conditionnelles. Afin de tenir compte des points de conditionnement, elles ont recours à un ordre de visite aléatoire des mailles de la grille. Cet ordre de visite aléatoire oblige, de sorte à correctement reproduire les structures de grande taille, à considérer des fenêtres de très grande taille, ce qui est alors coûteux en temps de calcul. On peut aussi parfois observer un effet dit de "pixellisation" (défaut de continuité d'une maille à une autre de la propriété physique représentée). On peut toutefois citer les méthodes décrites dans les demandes de brevet US2013/0110484 et US2011/0251833 qui introduisent pour la première fois dans le domaine de la simulation statistique multipoint une notion de chemin non nécessairement aléatoire, avec une précision de chemin unilatéral pour le document US2011/0251833. Toutefois si cette idée de chemin est évoquée, la technique de construction du chemin n'est pas explicitée et ses avantages ne sont pas démontrés.

On connaît également les documents suivants :
- US 2013/262051, qui décrit une méthode de simulation statistique multipoint à l'aide d'une fenêtre de masquage déplacée selon un chemin pré-ordonné unilatéral de visite des mailles ;
- Parra, A. et Ortiz, J.M., 2011, "Adapting a texture synthesis algorithm for conditional multipooint geostatistical simulation", Stochasitic environmental research and risk assesment, Springer, Berlin, DE, Vol. 25, No. 8,, 2011-05-01, pages 1101-1111*,* qui décrit un procédé de simulation statistique multipoint, à l'aide d'une fenêtre de masquage déplacée selon un chemin pré-ordonné unilatéral de visite des mailles ;
- Yong, G., Hexiang, B., Qiuming, C., 2008, "Solution of multiple-point Statistics to Extracting Information from Remotely Sensed Imagery", Journal of China University of Geosciences, vol. 19, No. 4, (2008-08-01), pages 421-428., qui décrit un procédé de classification d'objets d'une image digitale télé-détectée au moyen d'une simulation statistique multipoint, avec un ordre de visite déterminé selon un ordre décroissant du nombre de points de conditionnement voisins, et sans initialisation aux points de conditionnement.

La présente invention propose un procédé de construction de modèles géologiques par simulation statistique multipoint, avec un ordre de visite des mailles défini suivant une approche déterministe, tout en permettant l'intégration de données extérieures.

### Le procédé selon l'invention

Ainsi, la présente invention concerne un procédé de construction d'une grille représentative de la distribution d'une propriété physique d'une formation souterraine par simulation statistique multipoint, à partir d'au moins un point de conditionnement en lequel la valeur de ladite propriété est connue, ladite grille étant représentée par un modèle numérique sur ordinateur, chaque maille de ladite grille étant associée à une position géographique. Le procédé comporte les étapes suivantes :
a) on définit un ensemble de mailles initiales MI, ledit ensemble contenant au moins un desdits points de conditionnement ;
b) on visite chacune des mailles initiales MI dudit ensemble et on attribue à chaque maille MI une valeur représentative de ladite propriété par une méthode de remplissage contrainte par ladite valeur de ladite propriété connue en au moins un desdits points de conditionnement ;
c) on identifie au moins une maille non visitée MNV voisine d'au moins une maille déjà visitée MV, et pour chaque maille MNV, on détermine le nombre N de mailles visitées MV voisines
d) on visite chacune des mailles non visitées MNV selon un ordre décroissant de la valeur de N et on attribue à chaque maille MNV une valeur représentative de ladite propriété par une méthode de remplissage contrainte par ladite valeur de ladite propriété déterminée en au moins une maille voisine MV ;
e) on répète les étapes c) à d) jusqu'à ce que chacune des mailles de ladite grille ait été visitée.

Selon l'invention mise en oeuvre avec deux points de conditionnement, on peut définir l'ensemble desdites mailles initiales MI par les mailles intersectées par un chemin continu passant par lesdits points de conditionnement.

Selon l'invention mise en oeuvre avec au moins trois points de conditionnement, on peut définir l'ensemble desdites mailles initiales MI par les mailles intersectées par un chemin continu et fermé passant par lesdits points de conditionnement.

Selon l'invention, ledit chemin peut être formé de segments de droite reliant lesdits points de conditionnement.

Selon l'invention, une maille peut être définie comme voisine d'une autre maille si la distance entre leurs centres respectifs est inférieure à un seuil prédéterminé.

Selon l'invention, ladite méthode de remplissage d'une maille M de ladite grille ne contenant pas de point de conditionnement peut être réalisée, à partir d'une image d'apprentissage TI représentative de ladite propriété, selon les étapes suivantes :
- on peut positionner une fenêtre F de forme quelconque centrée sur la maille M de ladite grille ;
- on peut associer à la maille M un motif MM formé par la configuration des valeurs de ladite propriété aux points de conditionnement et/ou dans les mailles voisines MV contenues dans la fenêtre F ;
- on peut extraire au moins une sous-image STI de l'image d'apprentissage TI ;
- on peut sélectionner parmi les différents motifs formés par la configuration des valeurs de ladite propriété présents dans chaque sous-image STI, un motif MSTI représentatif de MM ;
- on peut extraire dudit motif MSTI un sous-ensemble de mailles de forme quelconque dont les valeurs peuvent être attribuées au sous-ensemble de mailles de même taille et de même forme centré sur la maille M de ladite grille.

Selon l'invention, lesdits sous-ensembles de mailles peuvent être constitués d'une seule maille. Selon l'invention, on peut construire ladite image d'apprentissage TI.

Selon l'invention, le motif MSTI peut correspondre au motif dont la distance avec le motif MM est la plus petite, ladite distance étant basée sur une métrique choisie parmi la norme L1 ou bien la norme L2. Selon l'invention, le motif MSTI peut être sélectionné de manière aléatoire parmi un groupe de motifs dont la distance avec le motif MM est inférieure à un seuil prédéterminé, ladite distance étant basée sur une métrique choisie parmi la norme L1 ou bien la norme L2. Selon l'invention, ladite propriété peut être de type catégorielle et ledit motif MSTI sélectionné peut correspondre à un tirage aléatoire dans une loi de probabilité portant sur les motifs de ladite image d'apprentissage TI.

Selon l'invention, ladite propriété physique peut correspondre à une variable discrète de type faciès géologique, ou à une variable continue de type porosité ou perméabilité.

On peut construire un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'invention, lorsque ledit programme est exécuté sur un ordinateur.

On peut définir un procédé d'exploitation d'une formation souterraine en réalisant les étapes suivantes :
- on peut construire une grille représentative de la distribution d'une propriété physique de ladite formation au moyen du procédé de construction d'une grille décrit selon l'invention ladite formation correspondant à un réservoir souterrain;
- on peut déterminer un schéma d'exploitation optimal dudit réservoir à partir de ladite grille ;
- on peut exploiter ledit réservoir en mettant en oeuvre ledit schéma d'exploitation optimal.

### Présentation succincte des Figures

D'autres caractéristiques et avantages du procédé selon l'invention, apparaîtront à la lecture de la description ci-après d'exemples non limitatifs de réalisations, en se référant aux figures annexées et décrites ci-après.
La Figure 1 montre un exemple de construction de l'ordre de visite des mailles d'une grille dans un cas où l'on dispose de trois points de conditionnement.
Les Figures 2A à 2F illustrent l'intérêt d'utiliser un ordre de visite déterministe des mailles d'une grille par rapport à un ordre de visite aléatoire dans le cas de chenaux imbriqués.
Les Figures 3A à 3C visent à montrer que la présente invention permet de prendre en compte des points de conditionnement sur un cas d'application de type chenaux en tresse.
Les Figures 4A à 4C illustrent sur un cas de réseaux de fractures que les points de conditionnement sont satisfaits par le procédé selon l'invention.

### Description détaillée du procédé

Les définitions suivantes sont utilisées au cours de la description de l'invention :
- *image d'apprentissage TI* : il s'agit d'une image représentative de la propriété physique étudiée, qui apporte une information quant à la forme des objets étudiés, leur distribution spatiale, la façon dont ils sont connectés. Elle est donnée sous la forme d'une grille comprenant un ensemble de mailles.
- *sous-image d'apprentissage STI* : il s'agit d'un sous-ensemble de mailles que l'on extrait de l'image d'apprentissage TI.
- *fenêtre F :* il s'agit d'un objet que l'on déplace sur l'image d'apprentissage pour apprécier l'occurrence de groupes de valeurs de la propriété physique étudiée, les valeurs étant celles des mailles comprises dans la fenêtre. Une fenêtre est centrée sur une maille.
- *motif :* il s'agit de la configuration de valeurs de la propriété physique étudiée d'un groupe de mailles contenues dans une fenêtre centrée sur une maille donnée.
- *point de conditionnement PC :* il s'agit de points en lesquels la valeur de la propriété physique étudiée est connue. Ces points de conditionnement peuvent correspondre à des données extérieures provenant par exemple de carottes ou de puits.

L'objet de la présente invention est un procédé pour représenter un modèle géologique du sous-sol sous la forme d'une grille à partir d'une image apprentissage et d'informations extérieures données en des points de conditionnement. Cette invention est basée sur l'utilisation d'un ordre de visite déterministe des mailles lors de la mise en oeuvre d'une simulation statistique multipoint conditionnelle. La propriété physique que l'on cherche à représenter sous la forme d'une grille peut être une variable discrète de type faciès géologique ou bien une variable continue de type porosité ou perméabilité. La grille construite par la présente invention peut être tout aussi bien bidimensionnelle que tridimensionnelle.

La présente invention comporte au moins les étapes suivantes :
a) on définit un ensemble de mailles initiales MI contenant au moins un desdits points de conditionnement ;
b) on visite chacune des mailles initiales MI dudit ensemble et on attribue à chaque maille MI une valeur représentative de ladite propriété par une méthode de remplissage contrainte par au moins un desdits points de conditionnement ;
c) on identifie au moins une maille non visitée MNV voisine d'au moins une maille déjà visitée MV, et pour chaque maille MNV, on détermine le nombre N de mailles visitées MV voisines ;
d) on visite chacune des mailles non visitées MNV selon un ordre décroissant de la valeur de N et on attribue à chaque maille MNV une valeur représentative de ladite propriété par une méthode de remplissage contrainte par au moins une maille voisine MV ;
e) on répète les étapes c) à d) jusqu'à ce que chacune des mailles de ladite grille ait été visitée.

Les principales étapes de la présente invention sont détaillées ci-après.

### Définition d'un ensemble de mailles initiales MI

Il s'agit dans cette première étape de définir l'ensemble des mailles MI à partir duquel le processus de simulation statistique multipoint va être initialisé. L'objectif de cette étape d'initialisation est d'empêcher l'apparition de discontinuités au cours du remplissage de la grille.

Selon un premier mode de réalisation privilégié de la présente invention pour lequel au moins trois points de conditionnement sont utilisés ou disponibles, la constitution de cet ensemble de mailles initiales est réalisée de la façon suivante :
- on identifie les mailles contenant les points de conditionnement ;
- on relie les points de conditionnement par un chemin continu et fermé ;
- on identifie les mailles intersectées par le chemin ainsi défini, ces mailles appartenant alors à l'ensemble de mailles initiales.
L'ensemble des mailles ainsi identifié constitue l'ensemble des mailles initiales MI.
De préférence, le chemin continu et fermé est obtenu en rejoignant les points de conditionnement par des segments de droite.

Selon un deuxième mode de réalisation de la présente invention pour lequel seuls deux points de conditionnement sont utilisés ou disponibles, le chemin défini ci-dessus peut être un chemin continu rejoignant les deux points de conditionnement en question.
Selon un troisième mode de réalisation de la présente invention pour lequel un seul point de conditionnement est utilisé ou disponible, l'ensemble des mailles initial requis peut être constitué de la maille contenant le point de conditionnement en question.

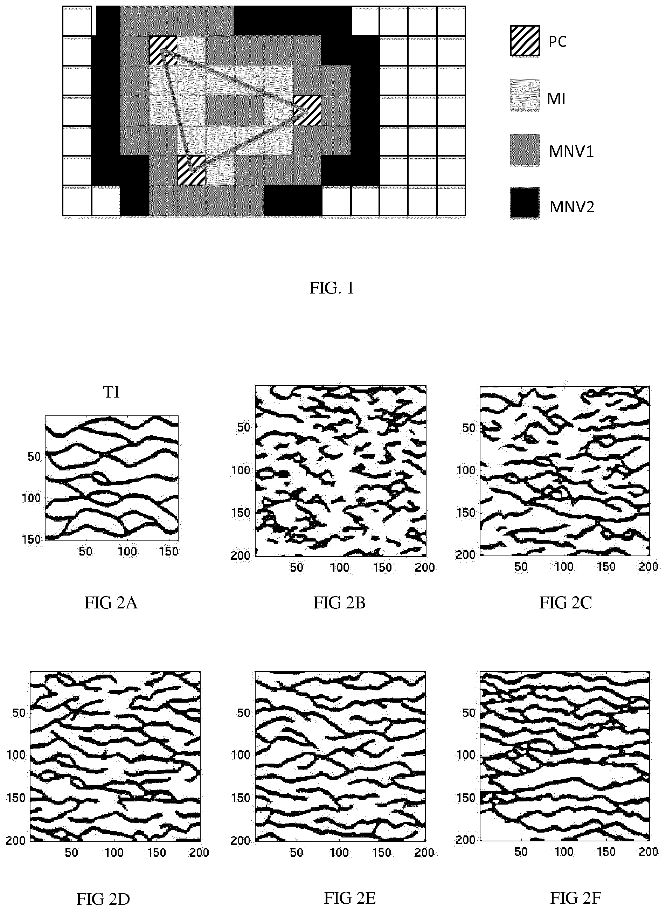

Une illustration de cette étape dans le cas de trois points de conditionnement est donnée en Figure 1. Sur cette figure, les points de conditionnement PC sont identifiés par des mailles hachurées. Ils sont ensuite reliés entre eux par des segments de droite afin de former un chemin continu et fermé (traits continus formant un triangle dont les sommets sont les points de conditionnement). Les mailles intersectées par ces segments de droite correspondent alors aux mailles initiales MI recherchées (mailles présentées en gris clair).

### Remplissage des mailles initiales MI

Les mailles initiales MI ainsi identifiées sont ensuite visitées dans un ordre quelconque et une valeur de la propriété physique étudiée est attribuée à chacune des mailles selon une méthode de remplissage qui sera décrite plus loin dans cette description.
Lorsque qu'une maille contient un point de conditionnement, la valeur de la propriété physique connue en ce point est directement attribuée à la maille.
Les mailles ainsi visitées et remplies sont notées par la suite mailles MV.

### Détermination de l'ordre de visite des mailles non visitées MNV

Il s'agit dans cette troisième étape de déterminer l'ordre de visite des mailles non encore visitées qui seront notées par la suite mailles MNV.
Au cours de cette étape, on identifie les mailles non encore visitées MNV et qui sont voisines des mailles déjà visitées MV. Une maille est considérée comme voisine d'une autre maille si la distance entre ces deux mailles est inférieure à un seuil prédéterminé, la distance pouvant être comprise comme une distance physique mais aussi comme une distance en nombre de mailles. Selon un mode de réalisation privilégié de la méthode, on considère que deux mailles sont voisines si aucune maille ne se situe entre elles.
Puis on détermine pour chaque maille non visitée MNV le nombre N de mailles visitées MV voisines, toujours selon la définition de voisinage choisie ci-dessus. On définit ensuite l'ordre de visite des mailles MNV en classant les mailles selon leur valeur décroissante de N. De cette façon, on visite en premier les mailles non encore visitées MNV ayant le plus grand nombre de mailles voisines déjà visitées et remplies MV.

Cet ordre de visite permet de procéder au remplissage de la grille de proche en proche, en partant des mailles dont le voisinage contient le moins de mailles vides, de sorte à bénéficier de la connaissance des valeurs de la propriété à modéliser dans ce voisinage.
Une illustration de cette étape est donnée en Figure 1. Si l'on considère que deux mailles sont voisines l'une de l'autre si aucune maille ne se situe entre elles, alors l'ensemble des mailles MNV recherché correspond aux mailles présentées sur la Figure 1 en gris foncé ou bien en noir suivant que l'on se trouve respectivement à l'itération 1 (MNV1) ou à l'itération 2 (MNV2) du processus (voir paragraphe "Processus itératif" ci-après).

### Remplissage des mailles non visitées MNV

Puis on visite chaque maille MNV selon l'ordre de visite précédemment établi et on lui attribue une valeur représentative la propriété physique étudiée par une méthode de remplissage qui sera décrite plus loin dans cette description.

### Processus itératif

Si, à l'issue d'une étape de remplissage des mailles MNV, la grille d'intérêt comporte des mailles qui n'ont pas encore été visitées, les étapes de "Détermination de l'ordre de visite des mailles non visitées MNV" suivie du "Remplissage des mailles non visitées MNV" sont répétées, et ce jusqu'à ce que la totalité des mailles de la grille ait été visitée.

### Processus de remplissage

Le processus de remplissage intervient lors des étapes de "Remplissage des mailles initiales MI" et "Remplissage des mailles non visitées MNV" précédemment décrites. Il s'agit de remplir les mailles encore vides par une valeur appropriée de la propriété physique étudiée, en utilisant comme contrainte les valeurs de la propriété étudiée déjà connues telles que les valeurs aux points de conditionnement et/ou les valeurs aux mailles déjà visitées MV.

Lorsque qu'une maille contient un point de conditionnement, la valeur de la propriété physique connue en ce point est directement attribuée à la maille.

Selon un mode de réalisation de la présente invention dans le cas d'une maille M ne contenant pas de point de conditionnement, cette étape est réalisée de la façon suivante :
- on positionne une fenêtre F de taille et de forme quelconque centrée sur la maille M de la grille, la fenêtre F peut être notamment un carré ou un rectangle centré sur la maille M. L'ensemble des mailles vides et des mailles contenant déjà des valeurs de la propriété physique constitue un motif associé à cette maille M que l'on appellera par la suite "motif de référence" et que l'on note motif MM ;
- on extrait au hasard au moins une sous-image STI de l'image d'apprentissage TI. On parcourt chaque sous-image d'apprentissage STI et on identifie sur chaque sous-image d'apprentissage les différents motifs formés par la configuration des valeurs de la propriété étudiée ;
- on sélectionne parmi les différents motifs identifiés dans chaque sous-image STI, un motif que l'on note MSTI représentatif du motif de référence MM, en comparant les motifs identifiés au motif de référence. La comparaison peut se faire selon différents modes de réalisation, parmi lesquels :
   ∘ on peut, par exemple comme dans (Wei et Levoy, 2000), sélectionner le motif MSTI de la sous-image d'apprentissage le plus proche du motif de référence MM. Différentes métriques peuvent être utilisées pour mesurer l'écart entre un motif de la sous-image d'apprentissage STI et le motif de référence. Dans un mode de réalisation privilégié, on a recours à la norme L1 ou encore à la norme L2 pour mesurer cet écart ;
   ∘ on peut également identifier l'ensemble des motifs de la sous-image d'apprentissage STI les plus proches du motif de référence MM, en utilisant, comme dans le mode de réalisation précédent, une notion de distance basée sur une métrique appropriée. On peut alors en déduire une loi de probabilité. Un tirage aléatoire est alors réalisé pour sélectionner le motif MSTI dans ce sous ensemble (Efros et Leung, 1999) ;
   o une troisième variante peut consister à stocker l'ensemble des motifs identifiés sur l'image d'apprentissage et à en déduire des lois de probabilités utilisées ensuite pour générer les valeurs à attribuer aux mailles de la grille (Strebelle, 2002). Cette approche ne requiert pas la définition d'une distance et ne vaut que pour la simulation de réalisations de variables discrètes telles que des faciès ;
- on extrait dudit motif sélectionné MSTI un sous-ensemble de mailles de forme quelconque et on attribue les valeurs de ce sous-ensemble au sous-ensemble de mailles de même forme et de même taille centré sur la maille M de la grille.

Selon un mode de réalisation de la présente invention, le sous-ensemble de mailles extrait du motif MSTI ne comprend qu'une seule maille, de même que le sous-ensemble de mailles centré sur la maille M.

### Construction de l'image d'apprentissage TI

Selon un mode de réalisation de la présente invention, une étape supplémentaire et préalable consiste à construire l'image d'apprentissage TI. Cette image peut correspondre à une image satellite, une réalisation d'une autre méthode de simulation (par exemple une méthode objet ou un processus génétique), une carte sismique de haute résolution, *etc.*

En outre, l'invention concerne un procédé d'exploitation d'une formation souterraine, dans lequel on réalise les étapes suivantes :
- on construit une grille représentative de la distribution d'une propriété physique au moyen du procédé de construction d'une grille décrit tel que décrit précédemment ;
- on détermine un schéma d'exploitation optimal du réservoir à partir de ladite grille ;
- on exploite ledit réservoir en mettant en oeuvre ledit schéma d'exploitation optimal.

A partir de la grille représentative obtenue lors des étapes précédentes, les spécialistes peuvent déterminer plusieurs schémas d'exploitation correspondant à différentes configurations possibles d'exploitation du réservoir souterrain : emplacement des puits producteurs et/ou injecteurs, valeurs cibles pour les débits par puits et/ou pour le réservoir, le type d'outils utilisés, les fluides utilisés, injectés et/ou récupérés, etc. Pour chacun de ces schémas, il convient de déterminer leurs prévisions de production. Ces prévisions de production probabilistes peuvent être obtenues au moyen d'un logiciel de simulation d'écoulement ainsi qu'au moyen du modèle numérique de réservoir calé. Une simulation de réservoir est une technique permettant de simuler les écoulements de fluides au sein d'un réservoir au moyen d'un logiciel appelé simulateur d'écoulement, et du modèle de réservoir. Par exemple, le logiciel PumaFlow ® (IFP Énergies nouvelles, France) est un simulateur d'écoulement.

On définit un ou plusieurs schémas d'exploitation possibles adaptés au modèle de réservoir (appelé également modèle géologique). Pour chacun de ces schémas, on détermine les réponses par simulation.

A partir des prévisions de productions probabilistes définies pour chaque schéma d'exploitation, les spécialistes peuvent par comparaison choisir le schéma d'exploitation qui leur semble le plus pertinent. Par exemple :
- en comparant le maximum du volume d'huile récupéré, on peut déterminer le schéma de production susceptible de fournir le maximum de récupération ou d'être le plus rentable ;
- en comparant l'écart type du volume d'huile récupéré, on peut déterminer le schéma de production le moins risqué.

On exploite alors le réservoir selon le schéma d'exploitation défini par exemple en forant de nouveaux puits (producteur ou injecteur), en modifiant les outils utilisés, en modifiant les débits et/ou la nature de fluides injectés, etc.

L'invention concerne, par ailleurs, un produit programme d'ordinateur téléchargeable depuis un réseau de communication et/ou enregistré sur un support lisible par ordinateur et/ou exécutable par un processeur. Ce programme comprend des instructions de code de programme pour la mise en oeuvre du procédé tel que décrit ci-dessus, lorsque le programme est exécuté sur un ordinateur.

### Exemples d'application

Les caractéristiques et avantages du procédé selon l'invention apparaîtront plus clairement à la lecture des exemples d'application ci-après.

L'exemple présenté en Figures 2A-2F permet d'illustrer l'intérêt d'utiliser un ordre de visite des mailles déterministe tel que proposé dans la présente invention pour reproduire, par méthode statistique multipoint conditionnelle, les structures observées sur une image d'apprentissage. L'image d'apprentissage TI utilisée dans cet exemple est présentée en Figure 2A. Cette image, bien connue de l'homme du métier, montre de nombreux chenaux. Du fait de la forte continuité et connectivité latérale des structures à retrouver, cette image est souvent utilisée pour comparer les forces et faiblesses de différentes méthodes de simulation statistique multipoint. Les Figures 2B à 2E présentent des réalisations simulées selon une méthode de l'art antérieur par méthode statistique multipoint avec chemin aléatoire pour des tailles de fenêtre différentes (respectivement 11x11 mailles, 15x15 mailles, 19x19 mailles, et 23x23 mailles). La Figure 2F présente une réalisation selon l'invention simulée par méthode statistique multipoint avec un chemin prédéterminé pour une taille de fenêtre de 11x11 mailles. On peut observer sur cet exemple que lorsque l'ordre de visite des mailles est aléatoire, il est difficile de reproduire la continuité et la connectivité des structures de grande taille avec des fenêtres de petite taille. En effet, pour une fenêtre comprenant 11×11 mailles (Figure 2B), les objets simulés sont de petite taille et très déconnectés. La structure simulée diffère significativement de celle représentée par l'image d'apprentissage. Il faut donc recourir à des fenêtres de plus grande taille. On observe ainsi qu'avec une fenêtre de 23x23 mailles (Figure 2E), l'image simulée se rapproche davantage de l'image d'apprentissage. Toutefois, plus les fenêtres sont grandes, plus les temps de calcul et les besoins en mémoire sont importants. Par ailleurs, même si dans ces conditions, on obtient des chenaux qui traversent l'image de part en part, la connectivité reste plus faible que sur l'image d'apprentissage. Par contre, en suivant un ordre de visite déterministe, tel que proposé par l'invention, une fenêtre de 11×11 mailles suffit pour reproduire la structure de l'image d'apprentissage (Figure 2F).

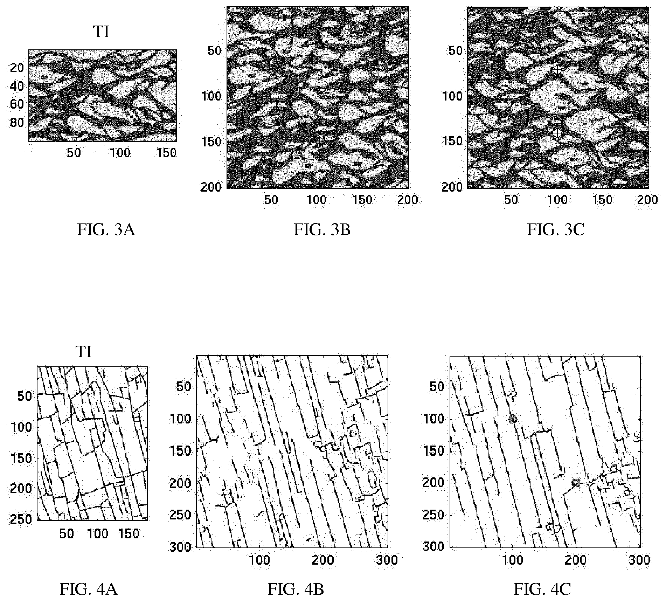

Le second exemple d'application présenté en Figures 3A-3C vise à montrer que l'utilisation d'un chemin déterministe pour la mise en oeuvre d'une méthode de simulation statistique multipoint permet de satisfaire les points de conditionnement disponibles. L'image d'apprentissage (TI) utilisée dans cet exemple est présentée en Figure 3A. Cette image présente des chenaux en tresse et est constituée de 160x99 mailles. On considère que cette image contient deux faciès: le faciès "chenal" (en noir sur la Figure 3) et le faciès "encaissant" (en gris clair sur les Figures 3A- 3C), et que les points de conditionnement sont localisés dans le faciès "encaissant". On génère deux réalisations de dimension 200x200 mailles à partir de cette image d'apprentissage : une réalisation sans points de conditionnement dite réalisation conditionnelle (Figure 3B) selon une méthode de l'art antérieur et une réalisation avec points de conditionnement dite réalisation non conditionnelle (Figure 3C) selon l'invention. La fenêtre utilisée pour ces réalisations est de dimension 25x25 mailles. On peut vérifier que les images simulées reproduisent correctement les structures observées sur l'image d'apprentissage. De plus, on peut voir aussi que la réalisation conditionnelle selon l'invention respecte, comme souhaité, les observations réalisées aux points de conditionnement (croix noires sur fond blanc en Figure 3C).

Dans un troisième exemple présenté en Figures 4A-4C, on va chercher à correctement retrouver les caractéristiques d'un réseau de fractures tout en satisfaisant des points de conditionnement. L'image d'apprentissage considérée, de taille 181×251 mailles, correspond à la cartographie d'un réseau réel de fractures (Müller *et al.,* 2010). On considère ici deux catégories : une catégorie "fractures" et une catégorie "encaissant". Pour effectuer la simulation statistique multipoint sur cet exemple, on utilise une fenêtre de taille 13x13 mailles, et on génère une réalisation non conditionnelle selon une méthode de l'art antérieur (Figure 4B) ainsi qu'une réalisation selon l'invention contrainte par la présence de fractures en deux points (disques noirs sur la Figure 4C). Les deux réalisations sont de dimension 300x300 mailles. Elles montrent des réseaux de fractures qui sont très similaires à celui représenté sur l'image d'apprentissage : on retrouve l'orientation préférentielle des fractures, leurs dimensions, ainsi que leur densité.

## Revendications

1. Procédé mis en oeuvre sur ordinateur pour la construction d'une grille représentative de la distribution d'une propriété physique d'une formation souterraine par simulation statistique multipoint, à partir d'au moins un point de conditionnement en lequel la valeur de ladite propriété est connue, ladite grille étant représentée par un modèle numérique sur ordinateur, chaque maille de ladite grille étant associée à une position géographique, **caractérisé en ce que** l'on réalise au moins les étapes suivantes :
a) on définit un ensemble de mailles initiales MI, ledit ensemble contenant au moins un desdits points de conditionnement ;
b) on visite chacune des mailles initiales MI dudit ensemble et on attribue à chaque maille MI une valeur représentative de ladite propriété par une méthode de remplissage contrainte par ladite valeur de ladite propriété connue en au moins un desdits points de conditionnement ;
c) on identifie au moins une maille non visitée MNV voisine d'au moins une maille déjà visitée MV, et pour chaque maille MNV, on détermine le nombre N de mailles visitées MV voisines ;
d) on visite chacune des mailles non visitées MNV selon un ordre décroissant de la valeur de N et on attribue à chaque maille MNV une valeur représentative de ladite propriété par une méthode de remplissage contrainte par ladite valeur de ladite propriété déterminée en au moins une maille voisine MV ;
e) on répète les étapes c) à d) jusqu'à ce que chacune des mailles de ladite grille ait été visitée.

2. Procédé selon la revendication 1, mis en oeuvre avec deux points de conditionnement, dans lequel on définit l'ensemble desdites mailles initiales MI par des mailles intersectées par un chemin continu passant par lesdits points de conditionnement.

3. Procédé selon la revendication 1, mis en oeuvre avec au moins trois points de conditionnement, dans lequel on définit l'ensemble desdites mailles initiales MI par des mailles intersectées par un chemin continu et fermé passant par lesdits points de conditionnement.

4. Procédé selon l'une des revendications 2 ou 3, dans lequel ledit chemin est formé de segments de droite reliant lesdits points de conditionnement.

5. Procédé selon l'une des revendications précédentes, dans lequel une maille est définie comme étant voisine d'une autre maille si la distance entre leurs centres respectifs est inférieure à un seuil prédéterminé.

6. Procédé selon l'une des revendications précédentes, dans lequel ladite méthode de remplissage d'une maille M de ladite grille ne contenant pas de point de conditionnement est réalisée, à partir d'une image d'apprentissage TI représentative de ladite propriété, selon les étapes suivantes :
- on positionne une fenêtre F de forme quelconque centrée sur la maille M de ladite grille ;
- on associe à la maille M un motif MM formé par la configuration des valeurs de ladite propriété aux points de conditionnement et/ou dans les mailles voisines MV contenues dans la fenêtre F ;
- on extrait au moins une sous-image STI de l'image d'apprentissage TI ;
- on sélectionne parmi les différents motifs formés par la configuration des valeurs de ladite propriété présents dans chaque sous-image STI, un motif MSTI représentatif de MM ;
- on extrait dudit motif MSTI un sous-ensemble de mailles de forme quelconque dont les valeurs sont attribuées au sous-ensemble de mailles de même taille et de même forme centré sur la maille M de ladite grille.

7. Procédé selon la revendication 6, dans lequel lesdits sous-ensembles de mailles sont constitués d'une seule maille.

8. Procédé selon l'une des revendications 6 à 7, dans lequel on construit ladite image d'apprentissage TI.

9. Procédé selon l'une des revendications 6 à 8, dans lequel le motif MSTI correspond au motif dont la distance avec le motif MM est la plus petite, ladite distance étant basée sur une métrique choisie parmi la norme L1 ou bien la norme L2.

10. Procédé selon l'une des revendications 6 à 8, dans lequel le motif MSTI est sélectionné de manière aléatoire parmi un groupe de motifs dont la distance avec le motif MMest inférieure à un seuil prédéterminé, ladite distance étant basée sur une métrique choisie parmi la norme L1 ou bien la norme L2.

11. Procédé selon l'une des revendications 6 à 8, dans lequel ladite propriété est de type catégorielle et dans lequel ledit motif MSTI sélectionné correspond à un tirage aléatoire dans une loi de probabilité portant sur les motifs de ladite image d'apprentissage TI.

12. Procédé selon l'une des revendications précédentes, dans lequel ladite propriété physique correspond à une variable discrète de type faciès géologique, ou à une variable continue de type porosité ou perméabilité.

13. Produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'une des revendications précédentes, lorsque ledit programme est exécuté sur un ordinateur.

14. Procédé d'exploitation d'une formation souterraine, **caractérisé en ce qu'**on réalise les étapes suivantes :
- on construit une grille représentative de la distribution d'une propriété physique de ladite formation au moyen du procédé de construction d'une grille décrit selon l'une des revendications 1 à 12, ladite formation correspondant à un réservoir souterrain ;
- on détermine un schéma d'exploitation optimal dudit réservoir à partir de ladite grille ;
- on exploite ledit réservoir en mettant en oeuvre ledit schéma d'exploitation optimal.

## Patentansprüche

1. Computerimplementiertes Verfahren zum Erstellen eines Rasters, der für die Verteilung einer physikalischen Eigenschaft einer unterirdischen Formation repräsentativ ist, durch statistische Mehrpunktsimulation ausgehend von mindestens einem Konditionierungspunkt, an dem der Wert der Eigenschaft bekannt ist, wobei der Raster durch ein Computerzahlenmodell dargestellt wird, wobei jede Zelle des Rasters mit einer geographischen Position assoziiert ist,
**dadurch gekennzeichnet, dass** mindestens die folgenden Schritte durchgeführt werden:
a) eine Einheit von Initialzellen MI wird definiert, wobei die Einheit mindestens einen der Konditionierungspunkte enthält;
b) jede der Initialzellen MI der Einheit wird aufgesucht und jeder Zelle MI wird ein Wert, der für die Eigenschaft repräsentativ ist, durch ein Ausfüllverfahren zugeordnet, das durch den Wert der bekannten Eigenschaft an mindestens einem der Konditionierungspunkte eingeschränkt wird;
c) mindestens eine nicht-aufgesuchte Zelle MNV benachbart der mindestens einen bereits aufgesuchten Zelle MV wird identifiziert, und für jede Zelle MNV wird die Anzahl N der benachbarten aufgesuchten Zellen MV bestimmt;
d) jede der nicht-aufgesuchten Zellen MNV wird gemäß einer absteigenden Reihenfolge des Werts von N aufgesucht und jeder Zelle MNV wird ein Wert, der für die Eigenschaft repräsentativ ist, durch ein Ausfüllverfahren zugeordnet, das durch den Wert der bestimmten Eigenschaft in mindestens einer benachbarten Zelle MV eingeschränkt wird;
e) die Schritte c) bis d) werden wiederholt, bis jede der Zellen des Rasters aufgesucht wurde.

2. Verfahren nach Anspruch 1,
welches mit zwei Konditionierungspunkten durchgeführt wird, wobei die Einheit der Initialzellen MI durch Zellen definiert wird, die auf einem kontinuierlichen Weg, der durch die Konditionierungspunkte führt, geschnitten werden.

3. Verfahren nach Anspruch 1,
welches mit drei Konditionierungspunkten durchgeführt wird, wobei die Einheit der Initialzellen MI durch Zellen definiert wird, die auf einem kontinuierlichen und geschlossenen Weg, der durch die Konditionierungspunkte führt, geschnitten werden.

4. Verfahren nach einem der Ansprüche 2 oder 3,
wobei der Weg aus Liniensegmenten gebildet wird, welche die Konditionierungspunkte verbinden.

5. Verfahren nach einem der vorhergehenden Ansprüche,
wobei eine Zelle als einer anderen Zelle benachbart definiert wird, wenn die Distanz zwischen ihren jeweiligen Mittelpunkten kleiner ist als eine vorherbestimmte Schwelle.

6. Verfahren nach einem der vorhergehenden Ansprüche,
wobei das Ausfüllverfahren einer Zelle M des Gitters, die keinen Konditionierungspunkt enthält, ausgehend von einem Lernbild TI, das für die Eigenschaft repräsentativ ist, gemäß den folgenden Schritten durchgeführt wird:
- ein Fenster F mit beliebiger Form, das auf die Zelle M des Rasters zentriert ist, wird positioniert;
- mit der Zelle M wird ein Muster MM assoziiert, das durch Auslegung der Werte der Eigenschaft an den Konditionierungspunkten und/oder in den benachbarten Zellen MV, die im Fenster F enthalten sind, gebildet wird;
- mindestens ein Teilbild STI des Lernbilds TI wird extrahiert;
- unter den verschiedenen Mustern, die durch die Auslegung der Werte der Eigenschaft gebildet werden und die in jedem Teilbild STI vorliegen, wird ein Muster MSTI ausgewählt, das für MM repräsentativ ist;
- aus dem Muster MSTI wird eine Untereinheit von Zellen mit beliebiger Form extrahiert, deren Werte der Untereinheit der Zellen mit derselben Größe und derselben Form zugeordnet werden, zentriert auf die Zelle M des Rasters.

7. Verfahren nach Anspruch 6,
wobei die Untereinheiten von Zellen aus einer einzelnen Zelle bestehen.

8. Verfahren nach einem der Ansprüche 6 bis 7,
wobei das Lernbild TI erstellt wird.

9. Verfahren nach einem der Ansprüche 6 bis 8,
wobei das Muster MSTI dem Muster entspricht, dessen Distanz zum Muster MM am kleinsten ist, wobei die Distanz auf einer Metrik basiert, die aus dem Standard L1 oder auch dem Standard L2 ausgewählt wird.

10. Verfahren nach einem der Ansprüche 6 bis 8,
wobei das Muster MSTI zufällig aus einer Gruppe von Mustern ausgewählt wird, deren Distanz zum Muster MM kleiner ist als eine vorherbestimmte Schwelle, wobei Distanz auf einer Metrik basiert, die aus dem Standard L1 oder auch dem Standard L2 ausgewählt wird.

11. Verfahren nach einem der Ansprüche 6 bis 8,
wobei die Eigenschaft vom Typ einer Kategorie ist, und wobei das ausgewählte Muster MSTI einer Zufallsauswahl gemäß einem Wahrscheinlichkeitsgesetz entspricht, das für die Muster des Lernbilds TI gilt.

12. Verfahren nach einem der vorhergehenden Ansprüche,
wobei die physikalische Eigenschaft einer diskreten Variablen vom Typ einer geologischen Facies oder einer kontinuierlichen Variablen vom Typ einer Porosität oder Permeabilität entspricht.

13. Computerprogrammprodukt, welches von einem Kommunikationsnetz heruntergeladen werden kann und/oder auf einem computerlesbaren Medium gespeichert ist und/oder von einem Prozessor ausgeführt werden kann, umfassend Programmcodeinstruktionen zur Durchführung des Verfahrens nach einem der vorhergehenden Ansprüche, wenn das Programm auf einem Computer ausgeführt wird.

14. Verfahren zur Förderung einer unterirdischen Formation, **dadurch gekennzeichnet, dass** die folgenden Schritte durchgeführt werden:
- ein Gitter, das für die Verteilung einer physikalischen Eigenschaft der Formation repräsentativ ist, wird mit dem Verfahren zum Erstellen eines Gitters, das nach einem der Ansprüche 1 bis 12 beschrieben wird, erstellt, wobei die Formation einem unterirdischen Reservoir entspricht;
- ein optimales Förderschema des Reservoirs wird ausgehend von dem Raster bestimmt;
- das Reservoir wird gefördert, indem das optimale Förderschema durchgeführt wird.

## Claims

1. A computer-implemented method of constructing a grid representative of the distribution of a physical property of an underground formation by multipoint statistical simulation, from at least one conditioning point where the value of said property is known, said grid being represented by a digital computer model, each cell of said grid being associated with a geographical position, **characterized in that** at least the following steps are carried out:
a) defining a set of initial cells MI, said set containing at least one of said conditioning points,
b) visiting each initial cell MI of said set and assigning to each cell MI a representative value of said property by means of a filling method constrained by said value of said property known in at least one of said conditioning points,
c) identifying at least one unvisited cell MNV adjoining at least one already visited cell MV and, for each cell MNV, determining the number N of adjoining visited cells MV,
d) visiting each unvisited cell MNV according to a decreasing order of the value of N and assigning to each cell MNV a representative value of said property by means of a filling method constrained by said value of said property determined in at least one adjoining cell MV,
e) repeating stages c) to d) until each cell of said grid has been visited.

2. A method as claimed in claim 1, implemented with two conditioning points, wherein the set of said initial cells MI is defined by cells intersected by a continuous path passing through said conditioning points.

3. A method as claimed in claim 1, implemented with at least three conditioning points, wherein the set of said initial cells MI is defined by cells intersected by a continuous and closed path passing through said conditioning points.

4. A method as claimed in any one of claims 2 or 3, wherein said path consists of line segments connecting said conditioning points.

5. A method as claimed in any one of the previous claims, wherein a cell is defined as adjoining another cell if the distance between the respective centres thereof is below a predetermined threshold.

6. A method as claimed in any one of the previous claims, wherein said method of filling a cell M of said grid containing no conditioning point is carried out from a training image TI representative of said property, according to the following steps:
- positioning a window F of any shape centred on cell M of said grid,
- associating with cell M a pattern MM formed by the configuration of the values of said property at the conditioning points and/or in the adjoining cells MV contained in window F,
- extracting at least one sub-image STI from training image TI,
- selecting a pattern MSTI representative of MM from among the various patterns formed by the configuration of the values of said property present in each sub-image STI,
- extracting from said pattern MSTI a subset of cells of any shape whose values are assigned to the subset of cells of same size and of same shape centred on cell M of said grid.

7. A method as claimed in claim 6, wherein said subsets of cells consist of a single cell.

8. A method as claimed in any one of claims 6 to 7, wherein said training image TI is constructed.

9. A method as claimed in any one of claims 6 to 8, wherein pattern MSTI corresponds to the pattern whose distance to pattern MM is the shortest, said distance being based on a metric selected from among norm L1 or norm L2.

10. A method as claimed in any one of claims 6 to 8, wherein pattern MSTI is randomly selected from among a group of patterns whose distance to pattern MM is below a predetermined threshold, said distance being based on a metric selected from among norm L1 or norm L2.

11. A method as claimed in any one of claims 6 to 8, wherein said property is of categorical type and said pattern MSTI selected corresponds to a random draw from a probability law relative to the patterns of said training image TI.

12. A method as claimed in any one of the previous claims, wherein said physical property corresponds to a discrete variable of geological facies type or to a continuous variable of porosity or permeability type.

13. A computer program product downloadable from a communication network and/or recorded on a computer-readable medium and/or processor executable, comprising program code instructions for implementing the method as claimed in any one of the previous claims, when said program is executed on a computer.

14. An underground formation development method, **characterized in that** the following stages are carried out:
- constructing a grid representative of the distribution of a physical property of said formation by means of the grid construction method described in any one of claims 1 to 12, said formation corresponding to an underground reservoir,
- determining an optimum development scheme for said reservoir from said grid,
- developing said reservoir by implementing said optimum development scheme.
